# EUROPEAN PATENT SPECIFICATION

(11) **EP 3 723 327 B1**
(45) Date of publication and mention of the grant of the patent: **01.03.2023**
(21) Application number: 20168675.5
(22) Date of filing: 08.04.2020
(51) Int. Cl.: H04L 12/40

(54) **SYSTEM AND METHOD FOR COMMUNICATION IN AN INDUSTRIAL ENVIRONMENT**
SYSTEM UND VERFAHREN ZUR KOMMUNIKATION IN EINER INDUSTRIELLEN UMGEBUNG
SYSTÈME ET PROCÉDÉ DE COMMUNICATION DANS UN ENVIRONNEMENT INDUSTRIEL

(30) Priority: 12.04.2019 FI 20195300; 28.06.2019 FI 20195583
(43) Date of publication of application: 14.10.2020
(73) Proprietor: Cumucore Oy, 02150 Espoo (FI)
(72) Inventor: Costa-Requena, Jose, 00990 Helsinki (FI)
(74) Representative: Aaltonen, Janne Lari Antero

(56) References cited:
- US-A1- 2008 279 155
- US-A1- 2018 242 100
- US-A1- 2019 059 066
- PALATTELLA MARIA RITA ET AL: "On Optimal Scheduling in Duty-Cycled Industrial IoT Applications Using IEEE802.15.4e TSCH", IEEE SENSORS JOURNAL, IEEE SERVICE CENTER, NEW YORK, NY, US, vol. 13, no. 10, 1 October 2013 (2013-10-01), pages 3655-3666, XP011524710, ISSN: 1530-437X, DOI: 10.1109/JSEN.2013.2266417 [retrieved on 2013-08-21]

## Description

### TECHNICAL FIELD

The present disclosure relates generally to telecommunications and networking; and more specifically, to systems and methods for communication in an industrial environment.

### BACKGROUND

Over the past few decades, industrial control systems have witnessed significant technological advancements that allows for wired, as well as wireless communication networks for supporting communication amongst a wide range of devices. Generally, communication amongst devices in an environment facilitates automation of complex processes on a large scale. Moreover, the environment demands for a reliable means for seamless and real-time connectivity amongst the industrial devices that may be distributed in both cellular and fixed infrastructure of communication network. For example, a U.S. patent application US20190059066A1 describes a method for synchronizing communication between a master clock and a slave clock, wherein the communication involves wireless network comprising a base station or eNB and a wireless terminal or UE and relates to solving the problem of unpredictable delays within the wireless network, e.g. caused by radio scheduling or radio framing that cannot be performed with a sufficient accuracy by applying the normal IEEE1588 delay measurement process.

Conventionally, direct physical connections were established using serial interfaces between the devices for enabling communication in the environment. However, recently, use of Industrial Ethernet-based Protocols (for example, EtherCAT, PROFINET, PROFIBUS, Common Industrial Protocol, HART, POWERLINK, Modbus-TCP, and Ethernet/IP) for robust communication in industrial environment have proliferated owing to its ability to use standard networking hardware for wired and wireless communication, and further, due to fine-tuning in terms of reliability and time sensitivity of exchange of data performed using Ethernet infrastructure. In an example, an Ethernet infrastructure having a family of channels, has channels of standard TCP/IP for exchange of data without time constraints, channels for real-time communication of data (such as alarms, and critical data) and Isochronous Real Time (IRT) channels for very precise high-speed communication between controlling devices in the environment. Additionally, the Ethernet-based Protocols utilize Precision Transparent Clock Protocol (such as Precision Time Protocol (PTP), Network Time Protocol (NTP)) to enable consistent and time synchronized operation of the industrial devices in the industrial environment. The Precise Time Clock Protocol (PTCP) assumes that latencies relating to downlink of data (namely, downlink latency) and uplink of data (namely, uplink latency) are equal. Moreover, if such assumption is not followed by the Ethernet-based Protocols then a timing error arises during exchange of data over the said network, wherein the timing error is half of a difference between the downlink latency and the uplink latency. Additionally, such asymmetry in latencies owing to the timing error attributes to asymmetric routing of downlink of data and uplink of data, that further leads to inherent asymmetry in exchange of data over wired and wireless communication networks in the industrial environment.

Furthermore, cellular networks are designed for optimal exchange of data, wherein uplink of data and downlink of data are inherently asymmetric thereby allowing downloading from fixed networks. In this regard, the cellular network allocates majority of resources (such as bandwidth) for downlink of data. However, such allocation affects clock synchronization in PTCP (such as PTP, NTP) employed thereby. Additionally, such allocation of resources for downlink further limits uplink of data in the industrial environment. Moreover, typically, cellular networks allocate uplink and downlink tunnels to devices (such as remote devices) that encapsulates data from the devices to mobile core, where the tunnels terminate to Packet Data Network Gateway (PGW). Moreover, the PGW connects the devices to fixed network (for example, public Internet, private LAN, and so forth). However, such cellular network does not provide Ethernet based Protocol to the devices, thereby preventing them from sending Ethernet frames. Therefore, connectivity over cellular network is limited to IP data that is communicated over Internet. Additionally, unicast, multicast or broadcast for bi-directional data communications for device discovery and address assignment is not feasible over the cellular networks.

Recently, 3rd Generation Partnership Project (3GPP) has specified radio interfaces, for example Narrowband-Internet of Things (NB-IoT), and Long-Term Evolution for Machines (LTE-M), for allowing the devices to send Ethernet Frames. Therefore, the devices are allowed to send Ethernet frames that are encapsulated into signaling messages and further decapsulated and sent as Ethernet frames after PGW. Subsequently, IP and non-IP data can be exchanged using such radio interfaces. However, said radio interfaces does not allow the devices to send Ethernet frames directly to the fixed network. Additionally, packet size and delay transmitted over the said radio interfaces are limited owing to encapsulation into signaling messages. Moreover, when large amount of data is exchanged, downlink thereof is problematic.

Additionally, in instances of congestion, there is a limit to a number of devices that are attached to communication network (namely, cellular network), owing to limited availability of communication channels for transmission of data. In such case, conventional systems fail to fulfil transmission requests from each of the devices in the industrial environment, thereby causing operational delays in the industrial environment.

Therefore, in light of the foregoing discussion, there exists a need to overcome the aforementioned drawbacks associated with the conventional systems for connectivity between plurality of devices in an industrial environment.

### SUMMARY

The present invention is defined in the appended independent claims to which reference should be made. Advantageous features are set out in the appended dependent claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:
FIG. 1 is a schematic illustration of a system for communication in an industrial environment, in accordance with an embodiment of the present disclosure;
FIG. 2 is schematic illustration of a network environment of a system for communication in an industrial environment, in accordance with an embodiment of the present disclosure; and
FIG. 3 is a schematic illustration of a flow chart depicting steps of a method for communication in an industrial environment, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The invention as described in the present disclosure provides a system that proffers seamless connectivity between wireless devices in industrial environment, for example across floor plant, and wired devices in the industrial environment, for example connected in private network, over cellular network. The system exchanges accurate timing information for synchronous communication between the plurality of devices. Therefore, the system enables consistent functionality across the industrial environment comprising wired devices and wireless devices, by synchronizing a time associated with each of the devices. Typically, the system generates timing information for each of the plurality of devices, wherein the timing information characterizes a time slot for uplink data from each of the plurality of industrial devices. Beneficially, assigning a time slot for the uplink data from each of the plurality of devices prevents occurrence of a congestion situation. Subsequently, requests for uplink data from the plurality of devices is met methodically, thereby substantially decreasing any spike in load relating to uplink of data in the system. Moreover, the system enables optimal exchange of data over cellular networks by allocating requirement-based resources (for example, latency and bandwidth) for downlink of data and uplink of data thereby allowing symmetric as well as asymmetric routing of data. Furthermore, the system enables direct communication of non-IP data over the cellular networks between the set of wired devices and the set of wireless devices, in the industrial environment. Moreover, the system employs existent infrastructure for such coherence during exchange of data between the set of wired devices and the set of wireless devices, over the cellular network, thereby substantially reducing cost of infrastructure and human intervention for maintaining reliable and seamless operation of such industrial environment.

The system described herein overcomes drawbacks associated with presently utilized Process Field Net (PROFINET) systems deployed for communication of data over industrial Ethernet, in the industrial environment. Moreover, the system also overcomes limitations associated with deployment of conventional cellular networks in the industrial environment. The said system can be deployed in industrial environments, for example, power distribution plants, smart grids, power generation plants, manufacturing facilities, warehouses, fabrication facilities, and so forth. Additionally, the system is configured to optimize the process of transmission of data from the plurality of devices in the industrial environment by avoiding a period on congestion in the data communication network (namely, cellular network).

The system for communication in the industrial environment enables wireless communication of data in the industrial environment. Specifically, the wireless communication of data is implemented over a cellular network. The cellular network allows transmission of data over a distance without employing wires, cables, or any other form of electrical conductors. Specifically, the cellular network allows for transmission of data without any physical connection between two points (such as two devices). The cellular network is facilitated by, for example, a spectrum of electromagnetic waves (namely, radio waves). Moreover, such wireless communication over cellular network is facilitated by employing a base transceiver (namely, the at least one base station; as discussed in detail later, herein). Frequency of the radio wave for transmission of data is in range of 3 kilohertz (kHz) to 300 gigahertz (GHz). More optionally, frequency of the radio wave for transmission of data is in range of 30 kilohertz (kHz) to 100 kilohertz (kHz).

The system comprises the server arrangement. Throughout the present disclosure, the term *"server arrangement"* refers to a structure and/or module that includes programmable and/or non-programmable components configured to store, process and/or share information. The server arrangement includes any arrangement of physical or virtual computational entities capable of enhancing information to perform various computational tasks. Furthermore, it will be appreciated that the server arrangement may be both single hardware server and/or plurality of hardware servers operating in a parallel or distributed architecture. In an example, the server arrangement may include components such as memory, a processor, a network adapter and the like, to store, process and/or share information with other computing components, such as the plurality of devices. Optionally, the server arrangement is implemented as a computer program that provides various services (such as database service, processing service, and so forth) to other devices, modules or apparatus.

Moreover, the term *"data communication network"* refers to individual networks, or a collection thereof interconnected with each other and functioning as a single large network. Such data communication network is implemented by way of wired communication network, wireless communication network, or a combination thereof. It will be appreciated that physical connection is established for implementing the wired network, whereas the wireless network is implemented using electromagnetic wave. Examples of such data communication network include, but are not limited to, Local Area Networks (LANs), Wide Area Networks (WANs), Metropolitan Area Networks (MANs), Wireless LANs (WLANs), Wireless WANs (WWANs), Wireless MANs (WMANs), the Internet, second generation (2G) telecommunication networks, third generation (3G) telecommunication networks, fourth generation (4G) telecommunication networks, fifth generation (5G) telecommunication networks and Worldwide Interoperability for Microwave Access (WiMAX), different generation of Wireless access (WiFi a, b, an, ac, ax) networks.

The data communication network is a cellular network. It will be appreciated that the cellular network refers to a radio communication network, wherein the cellular network is distributed over land through cells. Specifically, each cell includes a fixed location transceiver, for example, a base station. It will be appreciated that the cellular network allows for asymmetric communication between the plurality of devices, and further transport of data facilitated by the conventional cellular network consist of Internet Protocol (IP) based data. Pursuant to embodiments of the present disclosure, the cellular network employs Low Power Wide Area Network radio interfaces such as a Narrowband Internet of Things (NB-IoT), and Long-Term Evolution-Machine Type Communication (LTE-M) so as to enable device to device communication over the cellular network by facilitating transport of non-IP data.

The server arrangement is communicably coupled, via the data communication network, to at least one network core, and the plurality of devices. Specifically, the *"network core"* refers to high capacity communication facilities that connects primary nodes. The network core provides paths for exchange (namely, transmission) of data between different sub-networks. The network core acquires data from a source device, over the data communication network, and further transfers the data to fixed network (for example, fixed Ethernet network) for communication of the data to a receiver device. It will be appreciated that the source device and the receiver device may be a wired device or a wireless device. Optionally, the network core has a flat topology or a mesh topology. More optionally, the network core employs circuit switching technology, packet-switching technology or a combination thereof.

In an instance, a network core is an 5G Core (5GC). In such case, the network core is composed of at least one of constituent elements: Home Subscriber Server (HSS), Unified Data Management (UDM), Serving gateway (SGW), Session Management Function (SMF), Packet Data Network Gateway (PDN GW), User Plane Function (UPF), Mobility Management Entity (MME) and Access Mobility management Function (AMF). The constituent elements enable the network core to efficiently route data from a device (namely, sender) to another device (namely, receiver). In another instance, the network core is a SCS in 5G. The 4G SCEF will be integrated with Network Exposure Function (NEF) which becomes SCS that supports Cellular optimized IoT communications in 5G It will be appreciated that the SCEF or SCS network core implemented with the radio interfaces such as NB-IoT and LTE-M, allows for exchange of non-IP data using Ethernet frames between the plurality of devices.

In an example, the server arrangement and the plurality of devices are connected to the at least one network core via at least one base station. In another example, the plurality of devices are connected to each other via the at least one network core. In such case, the plurality of devices may employ server arrangement for connecting to the at least one network core. In yet another example, the plurality of devices are connected to the network core via the server arrangement. In such case, the server arrangement is connected to the at least one base station for communication with the at least one network core.

The *'base station'* refers to a fixed point of communication for wireless communication, such as cellular network. Specifically, the base station relays the server arrangement. The at least one base station provides information to and from, one or more transmitting/ receiving units. Pursuant to embodiments of the present disclosure, the base station relays data to and from the plurality of devices and/or the server arrangement. The base station is configured to allocate control radio channels (CCH) and data radio channels (DCCH) for unicast uplink transmission of data from the plurality of devices and/or the server arrangement. Additionally, the at least one base station is configured to allocate different radio control channels (MCCH) and traffic radio channels (MTCH) for downlink receiving of data for the plurality of devices and/or the server arrangement.

Additionally, the term *"devices"* refer to electronic devices, mechanical devices, or a combination thereof, associated with (or used in) the industrial environment. The plurality of devices are capable of performing specific tasks associated with the aforementioned system such as transmitting data and/or receiving data. Furthermore, the plurality of devices are intended to be broadly interpreted to include any electronic device that may be used for voice and/or data communication over the wired communication network, or the wireless communication network. Examples of the plurality of devices include, but are not limited to, cellular phones, personal digital assistants (PDAs), handheld devices, wireless modems, laptop computers, personal computers, electrical motors, electrical actuators, controllers, transmission equipment, transceiver stations, routers, and networking devices. Additionally, the plurality of devices include a casing, a functioning unit, a memory, a processor, a network interface card, a microphone, a speaker, a keypad, a display, a transmitter, and a receiver. Moreover, the plurality of devices are to be construed broadly, so as to encompass a variety of different types of devices (for example, electrical, mechanical, electronic, and so forth) that operate to perform a function. The function performed by each of the plurality of devices is governed or facilitated by way of the data communication network, in the industrial environment. In this regard, a device in the industrial environment operates based on instructions received from another device in the industrial environment, wherein the instruction is communicated using the data communication network.

Furthermore, the system comprises a set of wired devices and a set of wireless devices. In this regard, in the industrial environment, the set of wired devices are connected to each other using, for example, cables, optic fibers, and so forth. In an instance, such wired connection between the set of wired devices form a LAN in the industrial environment. More specifically, PROFINET cables may be used for such wired communication between the set of wired devices, thereby providing advantages of ethernet cable communication, over industrial environment. Alternatively, the set of wireless devices are connected using a wireless communication network, for example, the cellular network. Such wireless connection between the set of wireless devices may be implemented using Internet, wherein the Internet is provided using 5G protocol.

The plurality of wireless devices are Internet of Things (IoT)-based devices. Specifically, the IoT-based devices are non-standard computing devices, that connect to the data communication network wirelessly for transmission of data. Typically, the non-standard computing devices are traditionally non-internet-enabled physical devices. It will be appreciated that Internet technology is embedded with the non-standard devices so as to enable them to be monitored and controlled remotely. The IoT-based devices have Evolved Multimedia Broadcast Multicast Services (eMBMS) capabilities incorporated therein. The eMBMS capabilities enable the IoT-based and Industrial IoT (IIoT) devices to communicate by way of point-to-multipoint interface. Beneficially, such point-to-multipoint interface enables broadcast communication amongst the IoT devices. The IoT-based devices are employed in the industrial environment to enable communication of usable sensory data that allows direct communication between the plurality of devices owing to radio interfaces such as NB-IoT or LTE-M, and between a user and the plurality of devices, thereby allowing automation the industrial environment. It will be appreciated that the user may be a person or a bot in the industrial environment and/or associated remotely with the industrial environment.

The system is configured to generate the timing information for each of the plurality of devices, using the server arrangement. Specifically, *"timing information"* is data or a set of data representing a particular arrangement or a sequence of time, for each of the plurality of devices. Specifically, the particular arrangement or the sequence of time describes a time slot for each of the plurality of devices. More specifically, a given device from the plurality of devices operate to transmit data in accordance with a given time slot corresponding to the given device, as specified in the timing information. In an example, the timing information is represented by way of a list comprising a time slot corresponding to a unique identification relating to each of the plurality of devices. Specifically, the timing information allows for timestamping of the plurality of devices, thereby synchronizing them. Beneficially, the timing information is generated by the server arrangement so as to avoid collisions in a process of transmission of data by the plurality of devices, thereby minimizing delays and optimizing operations in the industrial environment. Optionally, the timing information is implemented as data in a file or a folder.

The timing information is converted into the plurality of timing packets to be received by each of the plurality of devices. Specifically, the server arrangement breaks down long timing information into smaller packets (namely, the plurality of timing packets). It will be appreciated that each of the plurality of timing packets traverse between source (namely, the server arrangement) and the receiver (namely, each of the plurality of devices). The plurality of timing packets are transmitted over plurality of communication links associated with the data communication network.

The timing information for a device comprise at least one of: an uplink time slot for the device, a downlink time slot for the device. Pursuant to embodiments of the present disclosure, the term *'uplink time slot'* refers to a time slot when the device transmits or uploads data for communication. Moreover, the term *'downlink time slot'* refers to a time slot when the device operates to receive or listen an uploaded data. In an instance, the device from the plurality of devices operate to receive data in accordance with the downlink time slot corresponding to the device, as specified in the timing information. Alternatively, in another instance, the device from the plurality of devices operate to receive all downlink data provided by, for example a base station.

The system employs a time reference clock for generating the timing information. The time reference clock is enabled by way of Global Positioning System (GPS) receiver, Global Navigation Satellite System (GNSS) receiver, or Atomic clock. Furthermore, the server arrangement receives a reference for the timing information from the time reference clock. The server arrangement encapsulates the reference for the timing information provided by the time reference clock to generate the timing information. Specifically, the time reference clock enables the server arrangement to realize precise time slots to be utilized for generation of the timing information.

The system is configured to broadcast the plurality of second encapsulated timing packets to each of the plurality of devices, via the at least one network core. It will be appreciated that *'broadcast'* refers to distribution of data by an electronic medium, typically an electromagnetic spectrum. The system communicates the timing information to the plurality of devices by way of the plurality of second encapsulated timing packets. Furthermore, the timing information generated by the server arrangement, is broadcasted as one or more broadcast messages to each of the plurality of devices by the at least one network core, in the industrial environment. Notably, the network core routes the plurality of timing packets so as to deliver it to intended receivers corresponding thereto.

The plurality of timing packets are at least one of: Internet Protocol (IP) based packets, non-IP packets, or a combination thereof. It will be appreciated that routing of the IP based packets essentially requires Internet (cellular network). Specifically, IP delivers an IP based packet from a source to a receiver solely based on an IP address stored in the IP based packet. Subsequently, an IP based timing packet comprise only IP address for a receiver of the IP based timing packet. Moreover, the non-IP packets are routed using the physical connections. Specifically, the physical connections are employed to deliver a non-IP packet from a source to a receiver solely based on Media Access Control (MAC) address stored in the non-IP packet. Subsequently, a non-IP based timing packet comprise only MAC address for a receiver of the non-IP based timing packet. Pursuant to embodiments of the present disclosure, in an instance, a timing packet from the plurality of timing packets comprises both an IP address for a receiver and a MAC address for the receiver. In another instance, a timing packet from the plurality of timing packets comprise IP address when receiver is a device from the set of wireless devices and a MAC address when receiver is a device from the set of wired devices.

The system is configured to provide a modified Clock Protocol (CP) to the plurality of devices, wherein the modified Clock Protocol is provided using transparent delivery method. The modified Clock Protocol (CP) refers to a modified PTP (namely, Precision Time Clock Protocol (PTCP)). Moreover, the modified CP is transmitted with the timing information. Typically, the PTCP is employed by the plurality of devices to correct drift in internal clock thereof. The PTCP provides spectrally efficient way for correction of 'date' and 'time' of devices in case of a reboot thereof. Subsequently, the PTCP enables synchronous transmission and reception of the timing information. Such synchronous transmission and reception of the timing information enables real-time or Isochronous communication of data in a congestion-free network.

The Transparent delivery method is employed to provide the Precision Time Clock Protocol (PTCP) to the set of wireless devices, thereby enabling them to use PROFINET. Specifically, the Transparent delivery method employs seven technical specification as discussed by 3GPP in Release 14. Optionally, the PTCP is transmitted in Multicast/Broadcast message Single Frequency Network (MBSFN) mode, thereby turning interference between cells in the cellular network into constructive diversity.

Moreover, optionally, a periodic eMBMS sub-frame is used in a NB-IoT transmission to reach higher accuracy in communication of the timing information to the plurality of devices.

It will be appreciated that Precision Time Protocol (PTP) or Network Timing Protocol (NTP) may be provided to the set of wired devices and/or the set of wireless devices, in place of the PTCP. Such selection of clock protocol is dependent on a required timing accuracy of the plurality of devices in the system.

First encapsulation of the plurality of timing packets is performed by employing the communication channel of the data communication network. Specifically, the communication channel adds a header and/or a trailer to each of the plurality of timing packets for first encapsulation thereof. More specifically, each of the plurality of timing packets are routed differently inside the data communication network based on header and trailer associated thereto. Moreover, the communication channel first encapsulates the plurality of timing packets to add an information that enables seamless transport thereof. In an instance, the plurality of timing packets are first encapsulated to add header information relating to a port to be used for transmission thereof.

Moreover, optionally, each of the plurality of timing packets are further encapsulated to add another header, by employing the data communication network. In such case, a timing packets is encapsulated to add information relating to a unique identifier (such as an IP address) associated with a source (namely, the server arrangement) of the timing packet and a unique identifier (such as an IP address, a MAC address) associated with a receiver (namely, a device from the plurality of devices) of the timing packet

Furthermore, second encapsulation of the plurality of first encapsulated timing packets is performed by employing the at least one network core, wherein the at least one network core further delivers the plurality of second encapsulated timing packets to the plurality of devices. The plurality of first encapsulated timing packets are further encapsulated to add a header and a trailer, by the at least one network core. The at least one network core does not decapsulate the plurality of first encapsulated timing packets. Alternatively, the at least one network core encapsulates the plurality of first encapsulated timing packets thereby minimizing operational delays due to such decapsulation.

The data communication network allocates a communication channel to each of the plurality of devices and the server arrangement for transmission of data therethrough. In such case, the communication channel are terminated in the at least one network core. A communication channel comprises an uplink tunnel and a downlink tunnel. Each tunnel is identified by a Tunnel End Points ID (TEID). The data communication network can be IP or non-IP whereas instead of TEID the uplink and downlink channel is identified by other means such as VLANs tags, MPLS labels, etc.

Optionally, the at least one network core employs SYNC protocol to second encapsulate the plurality of first encapsulated timing packets. Specifically, the SYNC protocol adds a header to a first encapsulated timing packet, wherein the header comprises a sequence number for the timing packet with reference to sequence numbers for the plurality of timing packets, and a Time to Air (TTA) for the timing packet. Beneficially, the SYNC protocol guarantees Single Frequency Network (SFN) operation at Radio Access Network (RAN) level, thereby enabling efficient utilization of electromagnetic spectrum for further transmission of the plurality of second encapsulated timing packets. Moreover, a trailer added by the SYNC protocol defines synchronization period, synchronization sequence and timestamp associated with the timing packet.

Optionally, the RAN is formed by at least one Evolved NodeB (eNB). More optionally, the at least one network core is connected to the server arrangement and/or the plurality of devices by the eNB, wherein the eNB is a base transceiver that provides functionality of the base station. Typically, each eNB incorporates a Multicast Coordination Entity (MCE), wherein the MCE is a logical entity part of the eMBMS architecture employed for the broadcast of the plurality of timing packets. Specifically, the MCE chooses radio parameters (such as bandwidth) of MBSFN based on Quality of Service Class Identifier (QCI) mapped to each multicast flow. Additionally, the radio parameters chosen by the MCE must be consistent across all eNB in order to fulfill the MBSFN requirements. More optionally, the user may manually setup allocation of the radio parameters using Orchestration and Management (O&M) interfaces for every eNB. Such allocation of the radio parameters can be found in a System Information Block (SIB) relating to each frame, wherein a frame is an encapsulated timing packet defined by the communication channel, the cellular network, or the at least one network core. The radio parameters employed to configure the allocation of the MBSFN subframes are: radio frame Allocation Period, radio frame Allocation Offset, and sub-frame Allocation. Beneficially, choosing the radio parameters for the transmission of data enables allocation of symmetric and/or asymmetric resources for transmission of data. Therefore, varying allocation of resources based on data optimizes the operation of transmission of data.

More optionally, the radio frame Allocation Period defines an interval between frames until a new MBSFN sub-frame is allocated, the radio frame Allocation Offset indicates a starting frame relative to the system frame number '0', and the sub-frame Allocation indicates which sub-frame inside a frame is carrying Multicast data. In an instance, maximum period of multicast timing transmission is 1 MBSFN sub-frame every 32 NB-IoT frames. Beneficially, choosing these values provide least bandwidth consumption for delivery of the plurality of timing packets, thereby optimizing communication over the NB-IoT.

The at least one network core further delivers the plurality of second encapsulated timing packets to the plurality of devices. The at least one network core routes each of the plurality of second encapsulated timing packets to each of the plurality of devices. Optionally, the set of wired devices obtain the plurality of second encapsulated timing packets based on MAC address, via the PROFINET cables. More optionally, the set of wireless devices obtain the plurality of second encapsulated timing packets based on IP address, via the cellular network.

Optionally, Evolved Multimedia Broadcast Multicast Service (eMBMS) is used to broadcast the plurality of second encapsulated timing packets periodically to each of the plurality of devices, wherein the plurality of devices are IoT-based devices. Specifically, using eMBMS subframes periodically increases accuracy of broadcast of data amongst the set of wireless devices. The set of wireless devices employ at least one of: NB IoT network, LTE-M, for communication over the cellular network.

The plurality of second encapsulated timing packets are broadcasted as ethernet frames to the plurality of wireless devices. Specifically, the ethernet frames enables machine-type transport of the timing information to the plurality of devices. More optionally, the cellular network employs radio interfaces such as NB-IoT and LTE-M so as to enable transport (specifically, broadcast) of the ethernet frames to the plurality of devices. Moreover, a given ethernet frame of the timing information starts with an Ethernet header, wherein the Ethernet header sores a MAC address of a source and a destination. Moreover, a middle section of the given Ethernet frame includes header for other protocols (such as Internet Protocol) and the given Ethernet frame ends with a frame check sequence (FCS)to detect any in-transit corruption of data therein. Beneficially, employing ethernet frames enable communication of the timing information to the plurality of devices without any distortion or loss of information thereof.

The system is configured to employ service-based architectures (SBA) for providing the plurality of timing packets when the cellular network is implemented using 5G communication protocol. More optionally, the timing information is encapsulated by the SBA, using the SYNC protocol. The service-based architectures use the transparent delivery method to provide the modified clock protocol to the plurality of wireless devices. Specifically, the service-based architectures allow to locate network functions such as the Access and Mobility Management Function (AMF) and the SCF in different parts of the 5G communication protocol employed by the cellular network. Moreover, 5G communication network facilitates deployment of seamless transport of data based on Ethernet such as PROFINET, used in the industrial environment with enhanced SCEF or SCS that bridges cellular network and fixed Ethernet network. Such enhanced SCEF is implemented by integrating SCEF network core functionality in Next Generation NodeB (gNB) or a first switch where the gNB is connected.

The system is configured to receive uplink data for communication from each of the plurality of devices based on the timing information. Specifically, the system receives the *"uplink data"* from each of the plurality of devices, for communication. The uplink data provided is IP based data, non-IP based data, or a combination thereof. Such uplink data is received from the plurality of devices in a time slot associated thereto, specified in the timing information. In an example, uplink data provided by a given device is to be transmitted to each of the plurality of devices. In another example, the uplink data provided by the given device is to be transmitted to a set of devices from the plurality of devices, wherein the uplink data relates for example, functionally, to each of the devices in the set. In yet another example, the uplink data provided by the given device is to be transmitted to another device from the plurality of industrial devices. In yet another example, the uplink data provided by the given device is to be transmitted to a remote device, wherein the remote device is outside the industrial environment.

In an instance, uplink data provided by a given device is directly routed to a destination device by the at least one network core. In another instance, the uplink data provided by a given device is routed by the at least one network core to the server arrangement. In such case, the server arrangement may store the uplink data or provide it back to the at least one network core for its transmission to the destination device.

The system is configured to provide downlink data to the plurality of devices, corresponding thereto. Specifically, the system provides the *"downlink data"* to the plurality of devices, for communication. The downlink data is IP based data, non-IP based data, or a combination thereof. In an instance, the downlink data corresponds to uplink data provided by each of the plurality of devices in their uplink time slot. In another instance, the downlink data may be data provided by the user or received by the server arrangement from an external source. It will be appreciated that data is routed to a receiver corresponding to data, by the at least one network core and further transmitted as a unicast, multicast or a broadcast by the base station for downlink. Optionally, the downlink data is provided, via the server arrangement. In an instance, a given device receives a plurality of downlink data broadcasted by the base station. In such case, the given device analyzes the plurality of downlink data broadcasted to determine downlink data useful for the given industrial data. In another instance, the at least one base station is synchronized so as to broadcast downlink data useful for a given industrial device in a downlink time slot associated with the given industrial device. According to an alternative embodiment, multicast can be used instead or in addition to broadcast.

In an instance, downlink data for a given device is directly routed from a source device by the at least one network core. In another instance, the downlink data for a given device is routed by the at least one network core from the server arrangement. In such case, the server arrangement may provide the downlink data to the at least one network core at a downlink time slot associated with the given device.

The downlink data is provided to the set of wireless devices using at least one of unicast, multicast, broadcast. Selection of downlink protocol depends on for example, usable bandwidth and also if some of the data is purposed for two or more devices (multicast or broadcast).

According to the embodiment, the non-IP data comprising non-IP data frames are sent directly from the set of wired devices to the set of wireless devices or between the set of wired devices. Example of non-IP data include: Address Resolution Protocol (ARP) messages that are sent from the set of wired devices over broadcast or multicast, to discover other devices in the industrial environment. Basically, these ARP messages will be sent over the cellular network as they are i.e. non-IP ARP, to the plurality of devices, as broadcast or multicast messages. The multicast is used to limit the ARP messages to be sent over subnet part of a multicast domain instead of broadcast to each of the plurality of devices.

In this regard, optionally, the system comprises at least one managing device for managing communication with the set of wired devices. The at least one managing device is configured to enable direct communication between the set of wired devices and the set of wireless devices. The at least one managing device receives an uplink signal message from a wireless device from the set of wireless devices. Optionally, such uplink signal message is received with NB-IoT messages and/or communication channel messages, via the eNB. Specifically, introduction of non-IP data inside the signal message using, NB-IoT sensors allows transfer of Ethernet frames between the plurality of devices, specifically, between the set of wired devices and the set of wireless devices. These uplink signal messages will be encapsulated directly on top of Ethernet or MultiProtocol Label Switching (MPLS), and are further delivered to switches connecting the at least one network core (specifically, SCEF network core) to the fixed Ethernet network. Subsequently, optionally, the SCEF forwards all uplink signal message comprising Ethernet frames, received from the plurality of devices, to receiver from the plurality of devices, corresponding thereto, via the cellular network, to the fixed Ethernet network. Moreover, optionally, the SCEF includes functionality to encapsulate and/or decapsulate the uplink signal message, and connect the set of wireless devices to the fixed Ethernet network.

Additionally, the at least one network core (implemented using the SCEF or SCS functionality) can incorporate Software Defined Networking (SDN) functionality to manage traffic in the system by allocating traffic to different Virtual Local Area Network (VLAN) based on requirements of the traffic.

The SBA as used in the 5G communication protocol allows utilization of local deployments of the at least one network core in the industrial environment. Typically, the SBA redirects a default Access and Mobility Management Function (AMF) connection of the industrial environment from cloud to specific AMF, when connected over the 5G communication protocol of the cellular network. The specific AMF handles network slice associated with the industrial environment and allows to isolate network resource for the industrial environment. This isolation of network resource provides different network slices with specific AMF for the industrial environment, thereby providing decreased latency and increased reliability in communication performed in the industrial environment. Moreover, redirecting the default AMF to the specific AMF further enables multiple network cores inside the industrial environment. Subsequently, multiple network cores prevent sending of data (for example, Internet of Things (IoT) or Industrial IoT data) to the multiple network cores over cloud. The data is communicated using an Industrial UPF. Thus, the system enables efficient and seamless connection of the set of wireless devices in the industrial environment to the fixed Ethernet network in the industrial network. Subsequently, such connection with the fixed Ethernet network enables seamless transmission of ethernet frames of data between the set of wireless devices and the set of wired devices thereby enhancing interoperability in the industrial environment.

The system receives the uplink data and provides the downlink data by employing at least one of the: server arrangement, base station, the at least one network core. In an example, a device provides an uplink data directly to the at least one network core, via the base station, in an uplink time slot associated with the device. In another example, the device provides the uplink data to the server arrangement. In such case, the uplink data provided to the server arrangement may not be in the uplink time slot associated with the device. Subsequently, optionally, the uplink data is provided to the base station, and further to the at least one network core, by the server arrangement, in the uplink time slot associated with the device. Alternatively, the uplink data is provided to the base station, and further the at least one network core, by the server arrangement, based on a priority of the uplink data. Herein, if the priority of the uplink data is low, then the uplink data is provided in an uplink time slot when the base station has substantially less or no uplink requests (namely, uplink data for communication, from any of the plurality of industrial devices). Moreover, if the priority of the uplink data is high, then the uplink data is provided instantaneously in real-time or near real-time to the base station and further the at least one network core.

More optionally, the system receives the uplink data and provides the downlink data based on a required latency of operation. It will be appreciated that latency is defined as a delay before transfer of data begins. Pursuant to embodiments of the present disclosure, the term latency defines a delay in receiving the uplink data from the plurality of devices and providing it to the at least one network core, via the server arrangement, or a delay in providing the downlink data from the at least one network core, via the server arrangement, to the plurality of devices.

It will be appreciated that during transmission of data (typically, as data packets) for downlink, a delay is experienced. Such delay is caused owing to at least one of: the at least one network core, the base station (for instance, eNB), air propagation, receiver processing. Typically, the delay owing to the at least one network core comprises transmission delay from clock synchronization (for example delay from NTP source), and delay owing to encapsulation of the data packets. Moreover, the delay owing to the base station comprises transmission delay from Serving Gateway (SGW), buffering time of SYNC protocol, and internal processing time required by the base station. The air propagation delay comprises time taken by transmitted data packets to reach a destination, from the base station, and the delay owing to the receiver processing is time utilized by the destination device to disambiguate the data packets to derive the data and deliver the data to the operating system of the destination device.

Pursuant to embodiments of the present disclosure, use of SYNC protocol for encapsulation of the data packets at the at least one network core turns the delay owing to the at least one network core and the base station into a deterministic delay. Typically, the SYNC protocol forces the base station to put overall transmission delay from clock synchronization and the transmitted data packets into air determined transport method (for example, eMBMS). The overall delay is contained inside the TTA header added by the SYNC protocol to encapsulate each of the data packets. Notably, by adding the delay owing the SYNC protocol to the transmission delay from clock synchronization when the data packets are at the at least one network core, the delay owing to the at least one network core and the delay owing to the base station can be compensated.

Moreover, Timing Advancement procedure is employed to compensate the delay owing to the air propagation. In this regard, when a terminal (such as a sender device) attaches to a network (such as the cellular network) using Random Access Channel (RACH), the base station evaluates an arrival time of the data packets to its frame time and tells the source device to advance their transmission by an amount specified in Timing Advancement Control Elements to avoid interference with other devices, thereby preventing a situation of congestion in the industrial environment. In an instance, the system enables transmission of data over cellular network facilitated by LTE. In such case, a value of arrival time to frame time is 16 times multiple of a basic time unit, wherein the basic timing unit is T_{S}= 0.0325ps. In such case, a maximum time range for providing the data packets in uplink is 1282 ^{∗} 16 ^{∗} T_{S} = 666.64µs. Additionally, if the plurality of devices has access to Timing Advancement signaling used by Radio Frequency (RF) modem, the delay owing to the air propagation can be corrected by upper layers of the RF. Additionally, the delay owing to the receiver processing may be random, depending on a type of the destination device.

It will be appreciated that the system includes networking frameworks for establishing a connection amongst the plurality of devices, the server arrangement, the at least one network core and the at least one base station. Such networking frameworks include an uplink connection for receiving uplink data from the plurality of devices and a downlink connection for providing downlink data to the plurality of devices. In an example, the networking framework is implemented by way of 4G Evolved Packet core (EPC) functionality for providing the uplink connection and the downlink connection to the plurality of devices. In another example, the networking framework is implemented by way of 5G Core (5GC) functionality for providing the uplink connection and the downlink connection to the plurality of devices. In yet another example, the networking framework is implemented by way of Narrowband Internet of Things network (NB-IoT) or LTE-M components (for example, 4G Service Capability Exposure function (SCEF), 5G service compatibility Server (SCS)) for providing optimized uplink connection for both IP data and non-IP data. In such case, the networking framework is implemented by way of Evolved Multimedia Broadcast Multicast Service (eMBMS) functionalities (for example, Broadcast Multicast service center (BM-SC), MBMS gateway) for providing optimized downlink connection for both IP data and non-IP data.

In an exemplary implementation, the data communication network is implemented as the cellular network, wherein a spectrum of the radio waves is employed to transmit data over the cellular network. It will be appreciated that the data to be transmitted is divided into a plurality of data packets. The network core is implemented by way of Evolved Packet Core (EPC). The source device from the plurality of the devices provides the plurality of data packets to the at least one network core, via a base station of the cellular network, at an uplink time slot associated with the source data. Moreover, the plurality of data packets are first encapsulated by the communication channel of the cellular network, to add header information thereto. The communication channel provides the plurality of first encapsulated data packets to the network core. The plurality of first encapsulated data packets are further encapsulated by the network core, to add a header and trailer thereto. The header of each of the plurality of packets comprise a unique identifier relating to the source device and a unique identifier relating to a receiver device of the data. The network core routes the plurality of second encapsulated data packets to the receiver device, via the fixed Ethernet network in the industrial environment.

In another implementation, the industrial environment may comprise 6 devices. In such case, the timing information includes an uplink time slot of 10 seconds and a downlink time slot of 10 seconds, for each of the 6 devices in the industrial environment. Subsequently, a first device provides uplink data for first 10 seconds, followed by a second device for next 10 seconds, and so on. Subsequently, each of the 6 device provides uplink data in 10 second interval, in a first minute. Furthermore, upon completion of a cycle wherein each of the 6 devices operate to provide uplink data (namely, a first uplink cycle), each of the 6 devices operate to receive downlink data. In such case, the first device receives downlink data for first 10 seconds after the first minute, followed by the second device, and so on. Subsequently, each of the 6 device receives downlink data in 10 second interval in a second minute. Furthermore, upon completion of a cycle wherein each of the 6 devices operate to receive downlink data (namely, a first downlink cycle), a second uplink cycle is initiated.

In the embodiment the data communication network is a cellular network and the plurality of the devices are for example plurality of industrial devices, such as plurality of wireless devices or plurality of mobile devices. In the embodiment the system comprises a set of wired devices and a set of wireless devices.

More specifically, in this embodiment the system for communication in an industrial environment, the system comprising a server arrangement communicably coupled, via a cellular network, to at least one network core, and a plurality of wireless devices in the industrial environment, wherein the system is configured to:
- generate, using the server arrangement, a timing information for each of the plurality of wireless devices, wherein the timing information is converted into a plurality of timing packets to be received by each of the plurality of wireless devices;
- broadcast, plurality of second encapsulated timing packets to each of the plurality of wireless devices, via the at least one network core, wherein
   first encapsulation of the plurality of timing packets is performed by employing communication channel of the cellular network; and second encapsulation of the plurality of first encapsulated timing packets is performed by employing the at least one network core, wherein the at least one network core further delivers the plurality of second encapsulated timing packets to the plurality of wireless devices;
- receive uplink data for communication from each of the plurality of wireless devices based on the timing information; and
- provide downlink data to the plurality of wireless devices, corresponding thereto.

The method for communication in an industrial environment according to this embodiment is implemented by using a system comprising a server arrangement communicably coupled, via a cellular network, to at least one network core, and a plurality of wireless devices in the industrial environment, wherein the method comprises:
- generating, using the server arrangement, a timing information for each of the plurality of wireless devices, wherein the timing information is converted into a plurality of timing packets to be received by each of the plurality of wireless devices;
- broadcasting, the plurality of timing information by providing it to the cellular network;
- performing first encapsulation of the plurality of timing packets by employing communication channel of the cellular network;
- performing second encapsulation of the plurality of first encapsulated timing packets by employing the at least one network core;
- broadcasting, the plurality of second encapsulated timing packets to each of the plurality of wireless devices, via the at least one network core;
- receiving uplink data for communication from each of the plurality of wireless devices based on the timing information; and
- providing downlink data to the plurality of wireless devices, corresponding thereto.

The system enables to avoid an instance of congestion in communication channels and allows reliable communication of Internet Protocol (IP) based data and non-IP based data over cellular network in the industrial environment. The system further allows direct communication between wired devices and wireless devices over the cellular network. Thereby the system substantially reduces the delays in operation and enables to synchronize the transmission of data between the wireless devices in an industrial environment connected to base stations or other wireless access points and to optimize the process of transmission of data from the plurality of devices in the industrial environment. More specifically, the system enables to avoid a period on congestion in the cellular network. For example the system and method proffer seamless connectivity between wireless devices in industrial environment, for example across floor plant, and wired devices in the industrial environment, for example connected in private network, over cellular network.

Furthermore, the disclosed system and method exchange accurate timing information for synchronous communication between the plurality of wireless or mobile devices. Therefore, the system enables consistent functionality across the industrial environment comprising wired devices and wireless devices, by synchronizing a time associated with each of the devices. The timing information generated by the server arrangement is broadcasted as one or more broadcast messages to each of the plurality of wireless or mobile devices by the at least one network core, in the industrial environment. The network core routes the plurality of timing packets so as to deliver it to intended receivers corresponding thereto. The timing means timestamps that are sent to the devices for synchronization. Specifically, the timing information allows for timestamping of the plurality of wireless or mobile devices, thereby synchronizing the timestamped plurality of wireless or mobile devices. By synchronizing a time associated with each of the devices the system enables consistent functionality across the industrial environment comprising wired devices and wireless devices. Beneficially, assigning a time slot for the uplink data from each of the plurality of devices prevents occurrence of a congestion situation.

Additionally, the system is configured to optimize the process of transmission of data from the plurality of devices in the industrial environment by avoiding a period on congestion in the cellular network. The cellular network allows for transmission of data without any physical connection between two devices. Further, the cellular network allows for asymmetric communication between the plurality of devices, and further transport of data facilitated by the conventional cellular network consist of Internet Protocol (IP) based data and also enables device to device communication over the cellular network by facilitating transport of non-IP data.

The present disclosure also relates to the method as described above. Various embodiments and variants disclosed above apply mutatis mutandis to the method.

The plurality of devices comprises a set of wired devices and a set of wireless devices.

The method comprises providing a modified Clock Protocol to the plurality of wireless devices, wherein the modified Clock Protocol is provided using transparent delivery method.

Optionally, the method comprises employing at least one managing device for managing communication with the set of wired devices.

Optionally, the method comprises employing a time reference clock for generating the timing information.

The method comprises employing service-based architectures for providing the plurality of timing packets when the cellular network is implemented using 5G communication protocol.

Optionally, the method comprises employing SYNC protocol to second encapsulate the plurality of first encapsulated timing packets.

The method comprises receiving uplink data for communication from each of the plurality of wireless devices on IP or non-IP frames. IP frame refers to Internet protocol frame. Non-IP frame refers to other type of data frame as IP. The uplink data can be any payload purposed to be communicated. Furthermore the method comprises broadcasting the downlink data as a set of data packets as IP or non-IP frames to the each of the plurality of wireless devices via the at least one of network core.

### DETAILED DESCRIPTION OF THE DRAWINGS

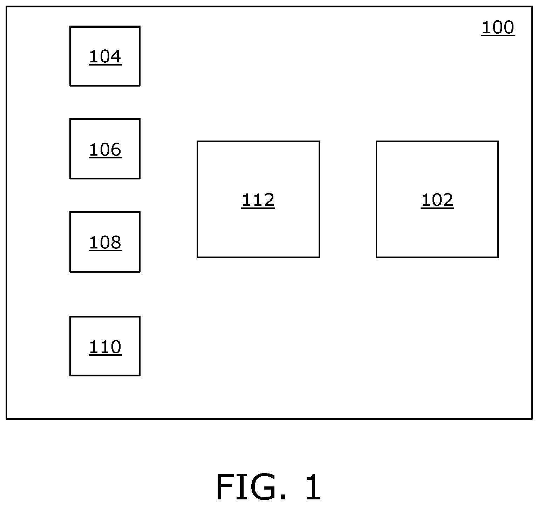

Referring to FIG. 1, illustrated is a schematic illustration of a system **100** for communication in an industrial environment, in accordance with an embodiment of the present disclosure. As shown, the system **100** for communication in an industrial environment comprises a server arrangement **102.** The server arrangement **102** is communicably coupled, via a data communication network (not shown), to at least one network core (depicted as a network core **112**), and a plurality of devices (depicted as devices **104, 106, 108,** and **110).** The system **100** generates a timing information for each of the devices **104, 106, 108,** and **110,** using the server arrangement **102.** Moreover, the timing information is converted into a plurality of timing packets to be received by each of the devices **104, 106, 108,** and **110.** The system **100** broadcasts plurality of second encapsulated timing packets to each of the devices **104, 106, 108,** and **110,** via the network core **112.** In this regard, the system performs first encapsulation of the plurality of timing packets by employing communication channel of the data communication network, and further performs second encapsulation of the plurality of first encapsulated timing packets by employing the network core **112.** The network core **112** further delivers the plurality of second encapsulated timing packets to the devices **104, 106, 108,** and **110.** Furthermore, the system **100** receives an uplink data from each of the devices **104, 106, 108,** and **110** based on the timing information and provides downlink data to the devices **104, 106, 108,** and **110,** corresponding thereto.

It may be understood by a person skilled in the art that the FIG. 1 includes a simplified illustration of the system **100** for communication in an industrial environment for sake of clarity only, which should not unduly limit the scope of the claims herein. The person skilled in the art will recognize many variations, alternatives, and modifications of embodiments of the present disclosure.

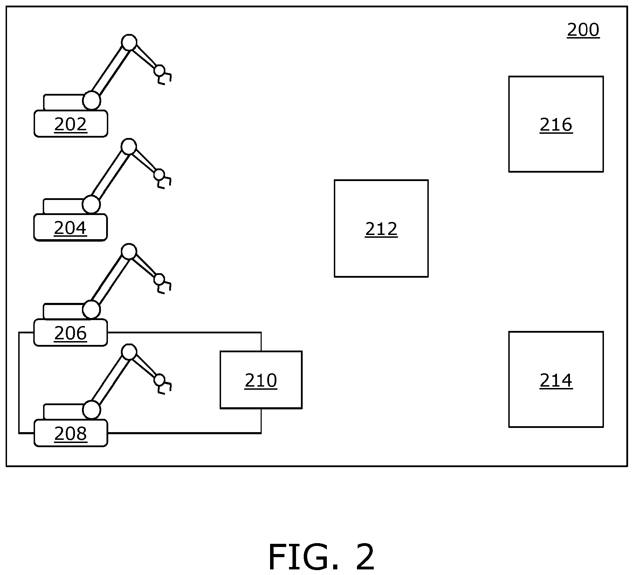

Referring to FIG. 2, illustrated is a network environment of a system **200** for communication in an industrial environment, in accordance with an embodiment of the present disclosure. As shown, the system **200** comprises a server arrangement **214.** The server arrangement **214** is communicably coupled, via a data communication network **212,** to at least one network core (depicted as a network core **216**), and a plurality of devices (depicted as devices **202, 204, 206,** and **208).** The devices **202, 204, 206,** and **208** comprises a set of wired devices (depicted as the devices **206** and **208**) and a set of wireless devices (depicted as the devices **202** and **204**). Herein, the devices **202** and **204 202, 204, 206,** and **208** are Internet of Things (IoT)-based devices. Furthermore, the system **200** comprises at least one managing device (depicted as a managing device **210**) for managing communication with the wired devices **206** and **208.**

The system **200** generates a timing information for each of the devices **202, 204, 206,** and **208,** using the server arrangement **214.** Notably, the timing information is converted into a plurality of timing packets to be received by each of the devices **202, 204, 206,** and **208.** The system **200** broadcasts the plurality of second encapsulated timing packets to each of the devices **202, 204, 206,** and **208,** via the network core **216.** In this regard, the system performs first encapsulation of the plurality of timing packets by employing communication channel of the data communication network **212,** and further performs second encapsulation of the plurality of first encapsulated timing packets by employing the network core **216.** The network core **216** further delivers the plurality of second encapsulated timing packets to the devices **202, 204, 206,** and **208.** Furthermore, the system **200** receives an uplink data from each of the devices **202, 204, 206,** and **208** based on the timing information. The uplink data received from the devices **202, 204, 206,** and **208** is provided to the server arrangement **214,** via the network core **216.** The system **200** provides downlink data to the devices **202, 204, 206,** and **208,** corresponding thereto. The downlink data is provided to the industrial devices **202, 204, 206,** and **208** by the server arrangement **214,** via the network core **216.**

It may be understood by a person skilled in the art that the FIG. 2 includes a simplified illustration of the system **200** for communication in an industrial environment for sake of clarity only, which should not unduly limit the scope of the claims herein. The person skilled in the art will recognize many variations, alternatives, and modifications of embodiments of the present disclosure.

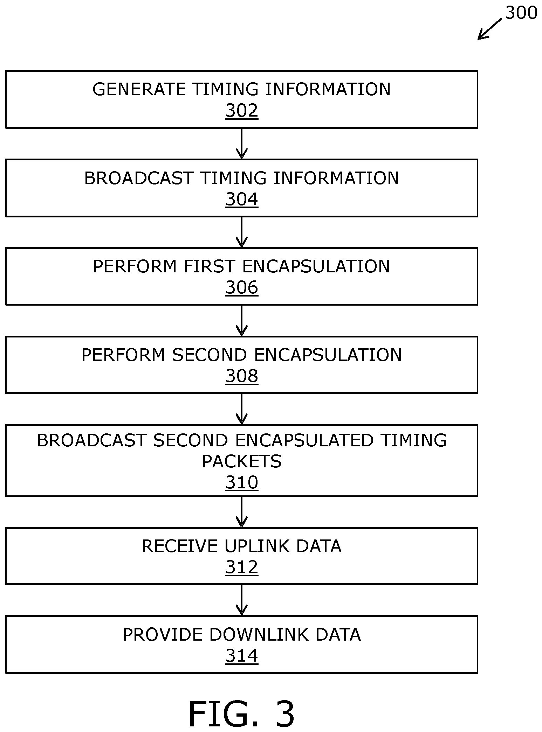

Referring to FIG. 3, illustrated is a flow chart depicting steps of a method **300** for communication in an industrial environment, in accordance with an embodiment of the present disclosure. The method is depicted as a collection of steps in a logical flow diagram, which represents a sequence of steps that can be implemented in hardware, software, or a combination thereof, for example as aforementioned.

The method for communication in an industrial environment is implemented via a system comprising a server arrangement communicably coupled, via a data communication network, to at least one network core, and a plurality of industrial devices. At a step **302,** a timing information is generated for each of the plurality of devices, using the server arrangement. The timing information is converted into a plurality of timing packets to be received by each of the plurality of devices. At a step **304,** the plurality of timing information are broadcasted by providing it to data communication network. At a step **306,** first encapsulation of the plurality of timing packets is performed by employing the communication channel of the data communication network. At a step **308,** second encapsulation of the plurality of first encapsulated timing packets is performed by employing the at least one network core. At a step **310,** the plurality of second encapsulated timing packets are broadcasted to each of the plurality of devices, wherein the at least one network core delivers the plurality of second encapsulated timing packets to the plurality of devices. At a step **312,** uplink data is received for communication from each of the plurality of devices based on the timing information. At a step **314,** downlink data is provided to the plurality of devices, corresponding thereto.

The steps **302, 304, 306, 308, 310, 312** and **314** are only illustrative and other alternatives can also be provided where one or more steps are added, one or more steps are removed, or one or more steps are provided in a different sequence without departing from the scope of the claims herein.

## Claims

1. A system (100, 200) for communication in an industrial environment, the system comprising a server arrangement (102, 214) communicably coupled, via a data communication network (212) using 5G communication protocol, to at least one network core (112, 216), and a plurality of devices (104, 106, 108, 110, 202, 204, 206, 208) that comprises a set of wired devices (206, 208) and a set of wireless devices (202, 204), wherein the system is configured to:
- generate, using the server arrangement, a timing information for each of the plurality of devices (104, 106, 108, 110, 202, 204, 206, 208), wherein the timing information is converted into a plurality of timing packets to be provided, by employing service-based architectures, to each of the plurality of devices (104, 106, 108, 110, 202, 204, 206, 208);
- broadcast by the at least one network core the plurality of timing information by providing it using User Plane Function to the data communication network;
- perform first encapsulation of the plurality of timing packets by employing communication channel of the data communication network;
- perform second encapsulation of the plurality of first encapsulated timing packets by employing the at least one network core;
- broadcast the plurality of second encapsulated timing packets as ethernet frames to each of the plurality of devices (104, 106, 108, 110, 202, 204, 206, 208) via the at least one network core;
- receive at least one of: Internet Protocol, IP, based data, non-IP data, or a combination thereof for communication from each of the plurality of devices (104, 106, 108, 110, 202, 204, 206, 208) based on the timing information by employing at least one of: the server arrangement, a base station and the at least one network core; and
- provide at least one of: Internet Protocol, IP, based data, non-IP data, or a combination thereof to the plurality of devices (104, 106, 108, 110, 202, 204, 206, 208), corresponding thereto, by employing at least one of the: server arrangement, base station and the at least one network core;
- provide a modified Clock Protocol to the plurality of devices (104, 106, 108, 110, 202, 204, 206, 208), wherein the modified Clock Protocol is provided using transparent delivery method.

2. The system (100, 200) according to claim 1, wherein the system comprises at least one managing device (210) for managing communication with the set of wired devices (206, 208).

3. The system (100, 200) according to of any of claims 1-2, wherein the system employs a time reference clock for generating the timing information.

4. The system (100, 200) according to any of claims 1-3, wherein timing information for a device (104, 106, 108, 110, 202, 204, 206, 208) comprise at least one of: an uplink time slot for the device, a downlink time slot for the device.

5. The system (100, 200) according to any of claims 1-4, wherein the plurality of timing packets are at least one of: Internet Protocol, IP, based packets, non-IP packets, or a combination thereof.

6. The system (100, 200) according to any of claims 1-5, wherein the at least one network core (112, 216) employs SYNC protocol to second encapsulate the plurality of first encapsulated timing packets.

7. A method for communication in an industrial environment, wherein the method is implemented using a system (100, 200) comprising a server arrangement (102, 214) communicably coupled, via a data communication network (212) using 5G communication protocol, to at least one network core (112, 216), and a plurality of devices (104, 106, 108, 110, 202, 204, 206, 208) that comprises a set of wired devices (206, 208) and a set of wireless devices (202, 204), wherein the method comprises:
- generating, using the server arrangement, a timing information for each of the plurality of devices (104, 106, 108, 110, 202, 204, 206, 208), wherein the timing information is converted into a plurality of timing packets to be provided, by employing service-based architectures, to each of the plurality of devices (104, 106, 108, 110, 202, 204, 206, 208);
- broadcasting by the at least one network core, the plurality of timing information by providing it using User Plane Function to the data communication network;
- performing first encapsulation of the plurality of timing packets by employing communication channel of the data communication network;
- performing second encapsulation of the plurality of first encapsulated timing packets by employing the at least one network core;
- broadcasting, the plurality of second encapsulated timing packets as ethernet frames to each of the plurality of devices (104, 106, 108, 110, 202, 204, 206, 208), via the at least one network core;
- receiving at least one of: Internet Protocol, IP, based data, non-IP data, or a combination thereof for communication from each of the plurality of devices (104, 106, 108, 110, 202, 204, 206, 208), on IP or non-IP frames, based on the timing information by employing at least one of: the server arrangement, a base station and the at least one network core; and
- providing at least one of: Internet Protocol, IP, based data, non-IP data, or a combination thereof, as a set of data packets as IP or non-IP frames, to the plurality of devices (104, 106, 108, 110, 202, 204, 206, 208), corresponding thereto, by employing at least one of the: server arrangement, base station and the at least one network core;
- providing a modified Clock Protocol to the plurality of devices (104, 106, 108, 110, 202, 204, 206, 208), wherein the modified Clock Protocol is provided using transparent delivery method.

8. The method according to claim 7, wherein the method comprises employing at least one managing device (210) for managing communication with the set of wired devices (206, 208).

9. The method according to of any of claims 7-8, wherein the method comprises employing a time reference clock for generating the timing information.

10. The method according to any of claims 7-9, wherein the method comprises employing SYNC protocol to second encapsulate the plurality of first encapsulated timing packets.

## Patentansprüche

1. System (100, 200) für eine Kommunikation in einer Industrieumgebung, das System umfassend eine Serveranordnung (102, 214), die über ein Datenkommunikationsnetzwerk (212) unter Verwendung eines 5G-Kommunikationsprotokolls mit mindestens einem Netzwerkkern (112, 216) und einer Vielzahl von Vorrichtungen (104, 106, 108, 110, 202, 204, 206, 208), die einen Satz drahtgebundener Vorrichtungen (206, 208) und einen Satz drahtloser Vorrichtungen (202, 204) umfasst, kommunizierbar gekoppelt ist, wobei das System konfiguriert ist zum:
- Erzeugen, unter Verwendung der Serveranordnung, von Zeitablaufinformationen für jede der Vielzahl von Vorrichtungen (104, 106, 108, 110, 202, 204, 206, 208),
wobei die Zeitablaufinformationen in eine Vielzahl von Zeitablaufpaketen, die an jede der Vielzahl von Vorrichtungen (104, 106, 108, 110, 202, 204, 206, 208), durch ein Anwenden von dienstbasierten Architekturen, bereitgestellt werden soll, umgewandelt werden;
- Senden, durch den mindestens einen Netzwerkkern, der Vielzahl von Zeitablaufinformationen durch ein Bereitstellen dieser unter Verwendung einer Benutzerebenenfunktion an das Datenkommunikationsnetzwerk;
- Durchführen einer erstmaligen Einkapselung der Vielzahl von Zeitablaufpaketen durch das Anwenden eines Kommunikationskanals des Datenkommunikationsnetzwerks;
- Durchführen einer zweitmaligen Einkapselung der Vielzahl von erstmalig eingekapselten Zeitablaufpaketen durch das Anwenden des mindestens einen Netzwerkkerns;
- Senden der Vielzahl von zweitmalig eingekapselten Zeitablaufpaketen als Ethernet-Rahmen an jede der Vielzahl von Vorrichtungen (104, 106, 108, 110, 202, 204, 206, 208)
über den mindestens einen Netzwerkkern;
- Empfangen von mindestens einem von: Internetprotokoll, IP,-basierten Daten, Nicht-IP-Daten oder einer Kombination davon für die Kommunikation von jeder der Vielzahl von Vorrichtungen (104, 106, 108, 110, 202, 204, 206, 208) basierend auf den Zeitablaufinformationen durch das Anwenden von mindestens einem von: der Serveranordnung, einer Basisstation und dem mindestens einen Netzwerkkern; und
- Bereitstellen von mindestens einem von: Internetprotokoll, IP,-basierten Daten, Nicht-IP-Daten oder einer Kombination davon an die Vielzahl von Vorrichtungen (104, 106, 108, 110, 202, 204, 206, 208),
entsprechend dazu, durch
das Anwenden von mindestens einem von der: Serveranordnung, Basisstation und dem mindestens einen Netzwerkkern;
- Bereitstellen eines modifizierten Taktprotokolls an die Vielzahl von Vorrichtungen (104, 106, 108, 110, 202, 204, 206, 208),
wobei das modifizierte Taktprotokoll unter Verwendung eines transparenten Zustellungsverfahrens bereitgestellt wird.

2. System (100, 200) nach Anspruch 1, wobei das System mindestens eine Verwaltungsvorrichtung (210) zum Verwalten der Kommunikation mit dem Satz drahtgebundener Vorrichtungen (206, 208) umfasst.

3. System (100, 200) nach einem der Ansprüche 1 bis 2, wobei das System einen Zeitreferenztakt zum Erzeugen der Zeitablaufinformationen anwendet.

4. System (100, 200) nach einem der Ansprüche 1 bis 3, wobei die Zeitablaufinformationen für eine Vorrichtung (104, 106, 108, 110, 202, 204, 206, 208) mindestens eines umfasst von: einem Uplink-Zeitschlitz für die Vorrichtung, einem Downlink-Zeitschlitz für die Vorrichtung.

5. System (100, 200) nach einem der Ansprüche 1 bis 4, wobei die Vielzahl von Zeitablaufpaketen mindestens eines ist von: Internetprotokoll, IP,-basierten Paketen, Nicht-IP-Paketen oder einer Kombination davon.

6. System (100, 200) nach einem der Ansprüche 1 bis 5, wobei der mindestens eine Netzwerkknoten (112, 216) ein SYNC-Protokoll anwendet, um die Vielzahl von erstmalig eingekapselten Zeitablaufpaketen zweitmalig einzukapseln.

7. Verfahren für die Kommunikation in einer Industrieumgebung, wobei das Verfahren unter Verwendung eines Systems (100, 200) implementiert wird, umfassend eine Serveranordnung (102, 214), die über ein Datenkommunikationsnetzwerk (212) unter Verwendung des 5G-Kommunikationsprotokolls mit mindestens einem Netzwerkkern (112, 216) und einer Vielzahl von Vorrichtungen (104, 106, 108, 110, 202, 204, 206, 208), die einen Satz drahtgebundener Vorrichtungen (206, 208) und einen Satz drahtloser Vorrichtungen (202, 204) umfasst, kommunizierbar gekoppelt ist, wobei das Verfahren umfasst:
- Erzeugen, unter Verwendung der Serveranordnung, von Zeitablaufinformationen für jede der Vielzahl von Vorrichtungen (104, 106, 108, 110, 202, 204, 206, 208), wobei die Zeitablaufinformationen in eine Vielzahl von Zeitablaufpaketen, die an jede der Vielzahl von Vorrichtungen (104, 106, 108, 110, 202, 204, 206, 208), durch das Anwenden von dienstbasierten Architekturen, bereitgestellt werden soll, umgewandelt werden;
- Senden, durch den mindestens einen Netzwerkknoten, der Vielzahl von Zeitablaufinformationen durch das Bereitstellen dieser unter Verwendung der Benutzerebenenfunktion an das Datenkommunikationsnetzwerk;
- Durchführen der erstmaligen Einkapselung der Vielzahl von Zeitablaufpaketen durch das Anwenden des Kommunikationskanals des Datenkommunikationsnetzwerks;
- Durchführen der zweitmaligen Einkapselung der Vielzahl von erstmalig eingekapselten Zeitablaufpaketen durch das Anwenden des mindestens einen Netzwerkkerns;
- Senden, der Vielzahl von zweitmalig eingekapselten Zeitpaketen als Ethernet-Rahmen an jede der Vielzahl von Vorrichtungen (104, 106, 108, 110, 202, 204, 206, 208),
über den mindestens einen Netzwerkkern;
- Empfangen von mindestens einem von: Internetprotokoll, IP,-basierten Daten, Nicht-IP-Daten oder einer Kombination davon für die Kommunikation von jeder der Vielzahl von Vorrichtungen (104, 106, 108, 110, 202, 204, 206, 208),
auf IP oder Nicht-IP-Rahmen, basierend auf den Zeitablaufinformationen durch das Anwenden von mindestens einem von: der Serveranordnung, einer Basisstation und dem mindestens einen Netzwerkkern; und
- Bereitstellen von mindestens einem von: Internetprotokoll, IP,-basierten Daten, Nicht-IP-Daten oder einer Kombination davon, als einen Satz von Datenpaketen als IP- oder Nicht-IP-Rahmen, an die Vielzahl von Vorrichtungen (104, 106, 108, 110, 202, 204, 206, 208), entsprechend dazu, durch das Anwenden von mindestens einem von der: Serveranordnung, Basisstation und
dem mindestens einen Netzwerkkern;
- Bereitstellen eines modifizierten Taktprotokolls an die Vielzahl von Vorrichtungen (104, 106, 108, 110, 202, 204, 206, 208),
wobei das modifizierte Taktprotokoll unter Verwendung eines transparenten Zustellungsverfahrens bereitgestellt wird.

8. Verfahren nach Anspruch 7, wobei das Verfahren das Anwenden mindestens einer Verwaltungsvorrichtung (210) zum Verwalten der Kommunikation mit dem Satz drahtgebundener Vorrichtungen (206, 208) umfasst.

9. Verfahren nach einem der Ansprüche 7 bis 8, wobei das Verfahren das Anwenden eines Zeitreferenztakts zum Erzeugen der Zeitablaufinformationen umfasst.

10. Verfahren nach einem der Ansprüche 7 bis 9, wobei das Verfahren das Anwenden des SYNC-Protokolls umfasst, um die Vielzahl von erstmalig eingekapselten Zeitablaufpaketen zweitmalig einzukapseln.

## Revendications

1. Système (100, 200) de communication dans un environnement industriel, le système comprenant un agencement de serveur (102, 214) couplé en communication, par l'intermédiaire d'un réseau de communication de données (212) à l'aide d'un protocole de communication 5G, à au moins un coeur de réseau (112, 216), et une pluralité de dispositifs (104, 106, 108, 110, 202, 204, 206, 208) qui comprend un ensemble de dispositifs filaires (206, 208) et un ensemble de dispositifs sans fil (202, 204), dans lequel le système est configuré pour :
- générer, à l'aide de l'agencement de serveur, des informations de synchronisation pour chacun de la pluralité de dispositifs (104, 106, 108, 110, 202, 204, 206, 208),
dans lequel les informations de synchronisation sont converties en une pluralité de paquets de synchronisation à fournir, en employant des architectures basées sur les services, à chacun de la pluralité de dispositifs (104, 106, 108, 110, 202, 204, 206, 208) ;
- diffuser par l'au moins un coeur de réseau la pluralité d'informations de synchronisation en la fournissant à l'aide de la fonction de plan d'utilisateur au réseau de communication de données ;
- effectuer une première encapsulation de la pluralité de paquets de synchronisation en employant un canal de communication du réseau de communication de données ;
- effectuer une seconde encapsulation de la pluralité de premiers paquets de synchronisation encapsulés en employant l'au moins un coeur de réseau ;
- diffuser la pluralité de seconds paquets de synchronisation encapsulés sous forme de trames Ethernet à chacun de la pluralité de dispositifs (104, 106, 108, 110, 202, 204, 206, 208) par l'intermédiaire de l'au moins un coeur de réseau ;
- recevoir au moins l'un de : données basées sur le protocole Internet, IP, données non IP, ou une combinaison de celles-ci pour la communication à partir de chacun de la pluralité de dispositifs (104, 106, 108, 110, 202, 204, 206, 208) sur la base des informations de synchronisation en employant au moins l'un de : l'agencement de serveur, d'une station de base et de l'au moins un coeur de réseau ; et
- fournir au moins l'un de : données basées sur le protocole Internet, IP, données non IP, ou une combinaison de celles-ci, à la pluralité de dispositifs (104, 106, 108, 110, 202, 204, 206, 208), correspondant à celles-ci, en employant au moins l'un de : l'agencement de serveur, la station de base et l'au moins un coeur de réseau ;
- fournir un protocole d'horloge modifié à la pluralité de dispositifs (104, 106, 108, 110, 202, 204, 206, 208),
dans lequel le protocole d'horloge modifié est fourni à l'aide d'un procédé de distribution transparent.

2. Système (100, 200) selon la revendication 1, dans lequel le système comprend au moins un dispositif de gestion (210) pour gérer la communication avec l'ensemble de dispositifs filaires (206, 208).

3. Système (100, 200) selon l'une quelconque des revendications 1 et 2, dans lequel le système emploie une horloge de référence temporelle pour générer les informations de synchronisation.

4. Système (100, 200) selon l'une quelconque des revendications 1 à 3, dans lequel les informations de synchronisation pour un dispositif (104, 106, 108, 110, 202, 204, 206, 208) comprennent au moins l'un de : un intervalle de temps de liaison montante pour le dispositif, un intervalle de temps de liaison descendante pour le dispositif.

5. Système (100, 200) selon l'une quelconque des revendications 1 à 4, dans lequel la pluralité de paquets de synchronisation sont au moins l'un de : paquets basés sur le protocole Internet, IP, paquets non IP, ou une combinaison de ceux-ci.

6. Système (100, 200) selon l'une quelconque des revendications 1 à 5, dans lequel l'au moins un coeur de réseau (112, 216) emploie le protocole SYNC pour encapsuler une seconde fois la pluralité de premiers paquets de synchronisation encapsulés.

7. Procédé de communication dans un environnement industriel, dans lequel le procédé est mis en oeuvre à l'aide d'un système (100, 200) comprenant un agencement de serveur (102, 214) couplé en communication, par l'intermédiaire d'un réseau de communication de données (212) à l'aide d'un protocole de communication 5G, à au moins un coeur de réseau (112, 216), et une pluralité de dispositifs (104, 106, 108, 110, 202, 204, 206, 208) qui comprend un ensemble de dispositifs filaires (206, 208) et un ensemble de dispositifs sans fil (202, 204), dans lequel le procédé comprend de :
- générer, à l'aide de l'agencement de serveur, des informations de synchronisation pour chacun de la pluralité de dispositifs (104, 106, 108, 110, 202, 204, 206, 208),
dans lequel les informations de synchronisation sont converties en une pluralité de paquets de synchronisation à fournir, en employant des architectures basées sur les services, à chacun de la pluralité de dispositifs (104, 106, 108, 110, 202, 204, 206, 208) ;
- diffuser par l'au moins un coeur de réseau, la pluralité d'informations de synchronisation en la fournissant à l'aide de la fonction de plan d'utilisateur au réseau de communication de données ;
- effectuer une première encapsulation de la pluralité de paquets de synchronisation en employant un canal de communication du réseau de communication de données ;
- effectuer une seconde encapsulation de la pluralité de premiers paquets de synchronisation encapsulés en employant l'au moins un coeur de réseau ;
- diffuser la pluralité de seconds paquets de synchronisation encapsulés sous forme de trames Ethernet à chacun de la pluralité de dispositifs (104, 106, 108, 110, 202, 204, 206, 208), par l'intermédiaire de l'au moins un coeur de réseau ;
- recevoir au moins l'un de : données basées sur le protocole Internet, IP, données non IP, ou une combinaison de celles-ci pour la communication à partir de chacun de la pluralité de dispositifs (104, 106, 108, 110, 202, 204, 206, 208), trames IP ou non IP, basées sur les informations de synchronisation en employant au moins l'un de : l'agencement de serveurs, une station de base et l'au moins un coeur de réseau ; et
- fournir au moins l'un de : données basées sur le protocole Internet, IP, données non IP, ou une combinaison de celles-ci, sous la forme d'un ensemble de paquets de données en tant que trames IP ou non IP, à la pluralité de dispositifs (104, 106, 108, 110, 202, 204, 206, 208), correspondant à celles-ci, en employant au moins l'un de : l'agencement de serveur, la station de base et l'au moins un coeur de réseau ;
- fournir un protocole d'horloge modifié à la pluralité de dispositifs (104, 106, 108, 110, 202, 204, 206, 208),
dans lequel le protocole d'horloge modifié est fourni à l'aide d'un procédé de distribution transparent.

8. Procédé selon la revendication 7, dans lequel le procédé comprend l'emploi d'au moins un dispositif de gestion (210) pour gérer la communication avec l'ensemble de dispositifs filaires (206, 208).

9. Procédé selon l'une quelconque des revendications 7 et 8, dans lequel le procédé comprend l'emploi d'une horloge de référence temporelle pour générer les informations de synchronisation.

10. Procédé selon l'une quelconque des revendications 7 à 9, dans lequel le procédé comprend l'emploi du protocole SYNC pour encapsuler une seconde fois la pluralité de premiers paquets de synchronisation encapsulés.
